(19) Europäisches Patentamt
European Patent Office
Office européen des brevets

(11) **EP 4 601 201 A1**

(12) **DEMANDE DE BREVET EUROPEEN**

(43) Date de publication:
**13.08.2025 Bulletin 2025/33**

(21) Numéro de dépôt: **25156160.1**

(22) Date de dépôt: **06.02.2025**

(51) Classification Internationale des Brevets (IPC):
**H04B 1/04** (2006.01)   **H04B 1/18** (2006.01)
**H01Q 3/28** (2006.01)   **H01Q 21/00** (2006.01)
**H01Q 9/04** (2006.01)   **H01Q 21/06** (2006.01)

(52) Classification Coopérative des Brevets (CPC):
**H04B 1/0483; H01Q 3/28; H01Q 21/0006;
H04B 1/0458; H04B 1/18;** H01Q 9/0435;
H01Q 21/065; H04B 2001/0408

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **06.02.2024 FR 2401135**

(71) Demandeurs:
• **THALES**
**92190 Meudon (FR)**
• **Université de Bordeaux**
**33000 Bordeaux (FR)**

• **Centre National de la Recherche Scientifique
75016 Paris (FR)**
• **Institut Polytechnique de Bordeaux
33402 Talence Cedex (FR)**

(72) Inventeurs:
• **GHIOTTO, Anthony
33400 TALENCE (FR)**
• **LE GALL, Timothée
78190 TRAPPES (FR)**
• **VARAULT, Stefan
78190 TRAPPES (FR)**
• **LOUIS, Bruno
78851 ELANCOURT (FR)**

(74) Mandataire: **Lavoix
2, place d'Estienne d'Orves
75441 Paris Cedex 09 (FR)**

(54) **ANTENNE ÉLÉMENTAIRE MULTI-PORTS AMÉLIORÉE ET ANTENNE RÉSEAU À BALAYAGE ÉLECTRONIQUE ACTIF ASSOCIÉE**

(57) Cette antenne élémentaire (5) comprend un élément rayonnant (10), muni de N zones d'excitation, et un module d'émission / réception (20), comportant, pour chaque entier i entre 1 et N, une ième chaîne (21) connectée, via une ième ligne d'alimentation (51) à la ième zone d'excitation (1), la ième chaîne comportant un ième amplificateur (212). L'antenne élémentaire comporte, dans la ième chaîne, un ième déphaseur de robustesse (213) d'un premier côté du ième amplificateur, entre le ième amplificateur et l'élément rayonnant, et un ième déphaseur de compensation (211) d'un second côté du ième amplificateur, opposé au premier côté. La somme des phases introduites par les ième déphaseur de robustesse et de compensation est constante quelle que soit la chaine considérée, et la phase introduite par le ième déphaseur de robustesse est strictement différente de la phase introduite par les autres déphaseurs de robustesse des autres chaines de l'antenne élémentaire.

FIG.1

EP 4 601 201 A1

**Description**

L'invention relève du domaine des antennes réseaux à balayage électronique actif.

Une telle antenne réseau associe une pluralité d'antennes élémentaires, chaque antenne élémentaire comportant un module d'émission/réception - TRM (pour « Transmit Receive Module » en anglais) et un élément rayonnant.

Le document FR 3062523 divulgue une antenne réseau dont chaque élément rayonnant se caractérise par au moins deux ports d'excitation, chaque port étant connecté au TRM par une ligne de transmission. De préférence, chaque élément rayonnant est connecté au TRM par quatre ports (ou huit ports dans un montage différentiel).

Ces différents ports constituent, en émission, autant de points d'injection de puissance de manière à augmenter la puissance totale de l'onde émise par l'élément rayonnant.

Ces différents ports constituent, en réception, autant de points de collecte de puissance de manière à répartir la puissance totale de l'onde incidente sur l'élément rayonnant.

Il s'agit donc d'antennes réseau principalement pour des applications de forte puissance, notamment pour des applications radars.

Chaque port est connecté à une chaîne d'émission et/ou de réception dédiée du TRM, via éventuellement un duplexeur, comme par exemple un circulateur ou un interrupteur.

La chaîne d'émission comporte classiquement un déphaseur contrôlable suivie d'un amplificateur de puissance afin d'appliquer au port correspondant un signal d'émission ajusté en phase et en amplitude.

Lors de la conception de l'antenne, les caractéristiques de l'amplificateur de puissance et celles de l'élément rayonnant sont optimisées conjointement. En particulier, l'impédance de la charge qui est connectée en sortie de l'amplificateur de puissance, via une ligne de transmission, est optimisée en fonction des caractéristiques recherchées pour l'amplificateur de puissance, comme son efficacité, sa puissance de sortie, sa linéarité, etc. Une impédance optimale est ainsi définie permettant une adaptation de la charge connectée en sortie de l'amplificateur de puissance de façon à transmettre à l'élément rayonnant avec une grande efficacité la puissance délivrée par l'amplificateur de puissance.

Or, une fois l'antenne élémentaire intégrée au sein d'une antenne réseau, les couplages électromagnétiques entre éléments rayonnants actifs des différentes antennes élémentaires sont à l'origine d'une désadaptation d'impédance. Dit autrement, l'élément rayonnant connecté en sortie de l'amplificateur de puissance d'une antenne élémentaire ne présente plus l'impédance optimale $Z_{opt}$ initiale, mais une impédance modifiée $Z_0$. C'est l'effet de variation de charge active (« active load pulling » en anglais).

Cette variation de charge peut également venir d'une désadaptation de l'élément rayonnant en raison d'une modification de son environnement proche, ou d'un signal perturbateur extérieur reçu par l'antenne (par exemple dans le cas d'une utilisation dans un contexte de guerre électronique).

La conséquence de cette désadaptation d'impédance est une dégradation de l'efficacité de l'amplificateur de puissance. Cette perte d'efficacité se traduit typiquement par une atténuation de l'onde émise de l'ordre d'un décibel.

Le même problème se retrouve sur la voie de réception associée à un port de l'élément rayonnant. Celle-ci comporte un amplificateur faible bruit sur l'entrée duquel est appliqué le signal reçu, collecté par le port correspondant. Or, lors de la conception de l'antenne élémentaire, l'amplificateur faible bruit est dimensionné en fonction de l'impédance de la charge connectée à son entrée. Une impédance optimale $Z_{opt}$ est ainsi déterminée. Cependant, en utilisation réelle, on constate une désadaptation d'impédance ayant par exemple pour cause des couplages électromagnétiques entre éléments rayonnants voisins. L'impédance $Z_0$ de la charge connectée en entrée de l'amplificateur faible bruit est différente de l'impédance optimale $Z_{opt}$. Cette désadaptation d'impédance en réception se traduit par une perte d'efficacité dans la transmission de la puissance du dispositif rayonnant vers l'amplificateur faible bruit, et une dégradation du facteur de bruit.

Par ailleurs, on connait, dans le domaine des antennes pour station de base d'une infrastructure de radiocommunication, le document WO 2023/072749.

Ce document est relatif à une antenne réseau comportant une pluralité de sous-réseaux, chacun constitué d'une paire d'éléments rayonnants. Les sous-réseaux sont disposés selon une matrice de lignes et de colonnes.

Chaque sous-réseau d'éléments rayonnants est connecté à un amplificateur de puissance d'une chaine d'émission / réception par une ligne de transmission.

Or, dans une utilisation en formation de faisceau, à cause des couplages électromagnétiques entre sous-réseaux actifs de l'antenne, un phénomène d'impédance de charge active vient désadapter le sous-réseau et la ligne de transmission, de l'amplificateur de puissance.

Pour neutraliser cette désadaptation à travers l'ensemble de l'antenne, WO 2023/072749 propose de modifier de manière différentielle la longueur des lignes de transmission entre amplificateur de puissance et sous-réseau de manière à introduire un retard. Plus précisément, les sous-réseaux d'une même ligne sont caractérisés par un même retard, alors que les retards entre les sous-réseaux de deux lignes est un multiple de λ/8.

Un déphasage de compensation est introduit en amont de chaque amplificateur de puissance par de moyens d'adaptation de la phase du signal permettant la formation de faisceau afin de neutraliser le retard introduit en aval de l'amplificateur de puissance.

Ainsi, les différentes ondes émises par les sous-réseaux appartenant à des lignes différentes de l'antenne se recombinent dans l'air de manière à atténuer les effets de la désadaptation lors d'une utilisation en formation de faisceau.

Cependant, le document WO 2023/072749 prévoit de corriger de la même manière les différents sous-réseaux d'une même ligne alors que le phénomène d'impédance de charge active dépend de l'environnement du sous-réseau considéré, c'est-à-dire de sa position dans l'antenne.

En effet, la solution technique du document WO 2023/072749 porte sur plusieurs sous-réseaux (et donc sur plusieurs éléments rayonnants) a des positions physiques différentes et ayant par conséquent des coefficients d'adaptation actifs différents les uns des autres.

La solution technique proposée par le document WO 2023/072749 est donc insuffisante pour minimiser la dispersion du coefficient de réflexion (ou du taux d'ondes stationnaires - TOS) à travers l'ensemble de l'antenne.

Ceci d'autant que la dispersion du coefficient de réflexion peut avoir d'autres causes que le couplage entre éléments rayonnants voisins en mode formation de faisceau. D'autres phénomènes peuvent en effet dégrader l'adaptation entre l'amplificateur de puissance et sa charge, comme une agression électromagnétique extérieure.

L'invention a donc pour but de proposer un antenne améliorée permettant de garantir une robustesse accrue du coefficient de réflexion sur l'ensemble de l'antenne et ceci quelle que soit l'utilisation envisagée (c'est-à-dire la cause d'une possible désadaptation).

Pour cela l'invention a pour objet une antenne élémentaire comprenant un élément rayonnant et un module d'émission et/ou de réception, le dispositif rayonnant comportant N zones d'excitations, N entier supérieur ou égal à 2, une zone d'excitation étant un port ou une paire de ports, le module d'émission et/ou de réception comportant, pour chaque entier i entre 1 et N, une ième chaîne connectée, via une ième ligne d'alimentation à la ième zone d'excitation de l'élément rayonnant, la ième chaîne comportant un ième amplificateur, caractérisée en ce que l'antenne élémentaire comporte, pour chaque chaîne, un ième déphaseur de robustesse d'un premier côté du ième amplificateur, entre le ième amplificateur et l'élément rayonnant, et un ième déphaseur de compensation d'un second côté du ième amplificateur opposé au premier côté, et en ce que la somme des phases introduites par le ième déphaseur de robustesse et le ième déphaseur de compensation est constante quelle que soit la chaine considérée, et la phase introduite par le ième déphaseur de robustesse est strictement différente de la phase introduite par les autres déphaseurs de robustesse des autres chaines de l'antenne élémentaire.

Suivant des modes particuliers de réalisation, l'antenne élémentaire comporte une ou plusieurs des caractéristiques suivantes, prises isolément ou suivant toutes les combinaisons techniquement possibles :

- chaque chaine est une chaine d'émission, l'amplificateur de la ième chaine étant un amplificateur de puissance.
- chaque chaine est une chaine de réception, l'amplificateur de la ième chaine étant un amplificateur faible bruit.
- les phases introduites par les déphaseurs de robustesse sont réparties uniformément dans l'intervalle [0° ; 180°[.
- l'élément rayonnant comportant quatre ports, les phases respectivement introduites par les premier, second, troisième, et quatrième déphaseurs de robustesse sont choisies égales à 0°, 45°, 90°, et 135°.
- les phases respectivement introduites par les premier, second, troisième, et quatrième déphaseurs de compensation sont choisies égales à 135°, 90°, 45°, et 0°.
- l'élément rayonnant comportant N paires de ports, la ième chaîne comporte un ième amplificateur positif et un ième déphaseur de robustesse positif associé à un port positif de la ième paire de ports, et un ième amplificateur négatif et un ième déphaseur de robustesse négatif associé à un port négatif de la ième paire de ports.
- le ième déphaseur de robustesse est constitué par une ième ligne de retard.
- le ième déphaseur de compensation est intégré dans un ième déphaseur contrôlable de la ième chaîne.

L'invention a également pour objet une antenne réseau à balayage électronique actif comportant une pluralité d'antennes élémentaires, caractérisée en ce que chaque antenne élémentaire est conforme à l'antenne élémentaire précédente.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- la figure 1 est une représentation schématique d'un premier mode de réalisation d'une antenne élémentaire multi-ports selon l'invention
- la figure 2 et un graphe représentant un abaque de Smith ;
- la figure 3 est une représentation schématique d'un second mode de réalisation d'une antenne élémentaire multi-ports selon l'invention, en montage différentiel ; et,
- la figure 4 est une représentation schématique d'un troisième mode de réalisation d'une antenne élémentaire multi-ports selon l'invention, en montage différentiel.

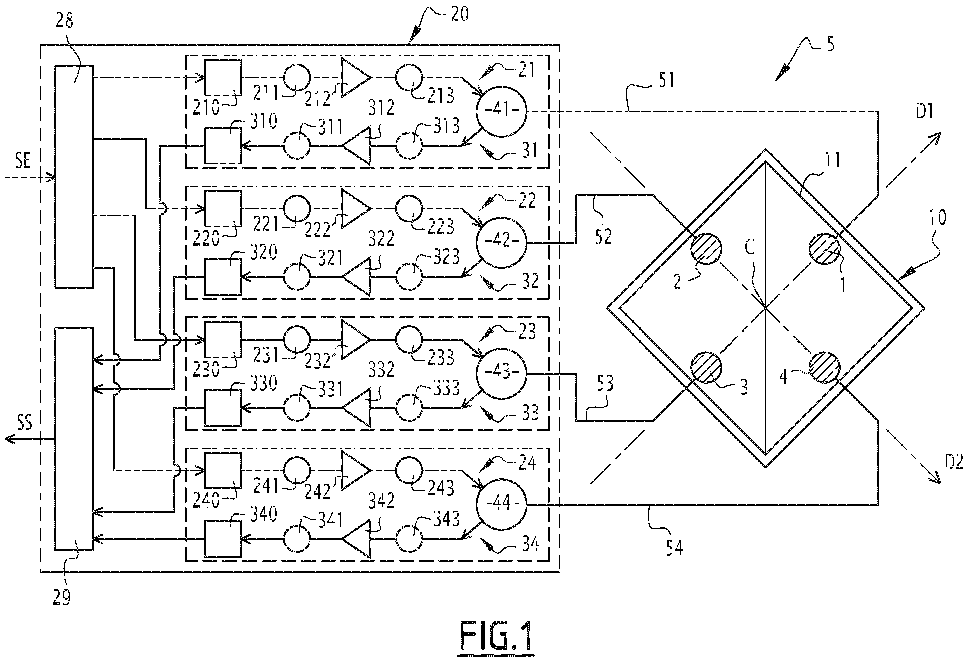

La figure 1 représente un premier mode de réalisation d'une antenne élémentaire multi-ports selon l'invention.

L'antenne élémentaire 5 comporte un élément rayonnant 10 et un module d'émission/réception, ou TRM 20, associé à l'élément rayonnant.

L'élément rayonnant 10 comporte un plan rayonnant, par exemple métallique et de forme carrée. En variante, le plan rayonnant peut prendre d'autres formes, notamment circulaire.

Le plan rayonnant de l'élément rayonnant 10 est caractérisé par deux directions, orthogonales entre elles, chaque direction passant par le milieu de deux côtés opposés de l'élément rayonnant. Les première et seconde directions, D1 et D2, se coupent au centre C du plan rayonnant.

Dans ce premier mode de réalisation, le nombre total N de ports est choisi par exemple égal à quatre.

Selon la première direction D1, l'élément rayonnant 10 est muni d'un premier port 1 et d'un troisième port 3, qui sont disposés de part et d'autre du centre C de l'élément rayonnant.

Selon la seconde direction D2, l'élément rayonnant 10 est muni d'un second port 2 et d'un quatrième port 4, qui sont disposés de part et d'autre du centre C.

Par exemple, un port est constitué par l'extrémité d'une ligne d'alimentation chevauchant une fente ménagée dans un plan de masse au-dessous du plan rayonnant. Par exemple encore, un port est constitué par l'extrémité d'une ligne d'alimentation connectée, par un via traversant le plan de masse, à l'arrière du plan rayonnant.

Le TRM 20 présente quatre voies adressant chacune un port particulier de l'élément rayonnant.

Chaque voie comporte une chaîne d'émission et une chaîne de réception.

Ainsi, le TR module 20 comporte une première chaîne d'émission 21 et une première chaîne de réception 31 connectées, via un premier duplexeur 41, à une première ligne d'alimentation 51, dont l'extrémité est connectée ou forme le premier port 1.

Ainsi le TRM 20 comporte une seconde chaîne démission 22 et une seconde chaîne de réception 32 connectées, via un second duplexeur 42, à une seconde ligne d'alimentation 52 du second port 2.

Ainsi, le TRM 20 comporte une troisième chaîne démission 23 et une troisième chaîne de réception 33 connectées, via un troisième duplexeur 43, à une troisième ligne d'alimentation 53, dont l'extrémité est connectée au troisième port 3.

Ainsi le TRM 20 comporte une quatrième chaîne d'émission 24 et une quatrième chaîne de réception 34 connectées, via un quatrième duplexeur 44, à une quatrième ligne d'alimentation 54, dont l'extrémité est connectée au quatrième port 4.

En outre, le TRM 20 comporte un composant d'entrée 28 permettant de recevoir d'une électronique d'émission (non représentée sur les figures) un signal d'émission SE à émettre, et de répéter ce signal d'entrée sur l'entrée de chacune des chaînes d'émission 21 à 24 du TR module 20.

Le TRM 20 comporte un composant de sortie 29 permettant de combiner les signaux reçus délivrés en sortie de chacune des chaînes de réception 31 à 34 du TRM 20, de manière à transmettre un signal de sortie SS vers une électronique de traitement (non représentée sur les figures).

Pour la formation de faisceau, de manière classique, chaque chaîne d'émission comporte, en série, un déphaseur contrôlable et un amplificateur de puissance. Cette formation de faisceau permet de rayonner l'énergie dans une ou plusieurs directions souhaitées, et dans une polarisation choisie. Selon la nature de l'élément rayonnant, l'antenne peut permettre une agilité de polarisation.

Ainsi, la première chaîne d'émission 21 comporte un déphaseur contrôlable 210 et un amplificateur de puissance 212, la seconde chaîne d'émission 22 comporte un déphaseur contrôlable 220 et un amplificateur de puissance 222, la troisième chaîne d'émission 23 comporte un déphaseur contrôlable 230 et un amplificateur de puissance 232, et la quatrième chaîne d'émission 24 comporte un déphaseur contrôlable 240 et un amplificateur de puissance 242.

Selon l'invention, chaque chaîne d'émission est, en outre, pourvue d'un déphaseur de robustesse et d'un déphaseur de compensation.

Ainsi, la première chaine d'émission 21 comporte un déphaseur de robustesse 213 et un déphaseur de compensation 211, la seconde chaine d'émission 22 comporte un déphaseur de robustesse 223 et d'un déphaseur de compensation 221, la troisième chaine d'émission 23 comporte un déphaseur de robustesse 233 et d'un déphaseur de compensation 231, et la quatrième chaine d'émission 24 comporte déphaseur de robustesse 243 et d'un déphaseur de compensation 241.

Une chaîne d'émission peut être identifiée par l'entier i du port auquel elle est connectée.

Dans le mode de réalisation de la figure 1, le déphaseur de robustesse de la ième chaine d'émission est positionné en aval (selon le sens de propagation du signal d'émission) de l'amplificateur de puissance, c'est-à-dire entre la sortie de l'amplificateur de puissance et le duplexeur.

Le déphaseur de compensation de la ième chaine d'émission est, quant à lui, placé en amont de l'amplificateur de puissance, c'est-à-dire entre la sortie du déphaseur contrôlable et l'entrée de l'amplificateur de puissance.

Le déphaseur de robustesse de la ième chaîne d'émission introduit une phase prédéfinie $\phi_i$ dans le signal d'émission. Cette phase se retrouve dans le coefficient de réflexion de la ligne d'alimentation reliant la chaine d'émission à l'élément rayonnant. La variation de la phase du coefficient de réflexion se traduit par une variation de l'impédance de la charge connectée en sortie de la chaine d'émission, i.e. de l'amplificateur de puissance.

Le déphaseur de compensation de la ième chaîne d'émission introduit une phase prédéfinie $\phi'_i$ dans le signal d'émission.

La somme de la phase $\phi_i$ introduite par le déphaseur de robustesse de la ième chaîne d'émission et de la phase $\phi'_i$ introduite par le déphaseur de compensation de la ième chaîne d'émission est une constante Cste, qui est commune à toutes les chaînes d'émission d'une même l'antenne élémentaire 5.

Ainsi :

$$\forall i, i \in \{1, 2, \ldots, N\}: \phi_i + \phi'_i = Cste$$

Cette constante peut être différente d'une antenne élémentaire à l'autre.

Le déphaseur de compensation permet donc de compenser le déphasage introduit par le déphaseur de robustesse, et garantir ainsi que toutes les chaînes d'émission introduisent le même déphasage total ($\phi_i$ + ($\phi'_i$) en aval du déphaseur contrôlable.

La phase $\phi_i$ introduite par un déphaseur de robustesse est spécifique de la ième chaîne d'émission. Dit autrement, deux déphaseurs de robustesse de l'antenne élémentaire introduisent des phases différentes : $\forall i, \forall j, i \neq j: \phi_i \neq \phi_j$

De préférence, les phases introduites par les N déphaseurs de robustesse sont réparties uniformément dans l'intervalle [0° ; 180°[, les phases introduites étant modulo 180°/N.

Avec N égal à 4, les phases sont alors réparties modulo 45°.

On choisit par exemple les phases 0°, 45°, 90°, et 135° en tant que phases respectivement introduites par les premier, second, troisième, et quatrième déphaseurs de robustesse, 213, 223, 233 et 243.

Et on choisit les phases 135°, 90°, 45°, et 0° en tant que phases respectivement introduites par les premier, second, troisième, et quatrième déphaseurs de compensation 211, 221, 231 et 241 de manière à garantir que la phase totale introduite par chaque paire de déphaseurs soit constante d'une chaîne d'émission à l'autre (en aval des déphaseurs contrôlables) : Cste = 135°.

Sur la Figure 1, l'élément rayonnant 10 est par conséquent excité par quatre lignes d'alimentation portant des signaux d'émission équidéphasés par les moyens déphaseurs présentés ci-dessus.

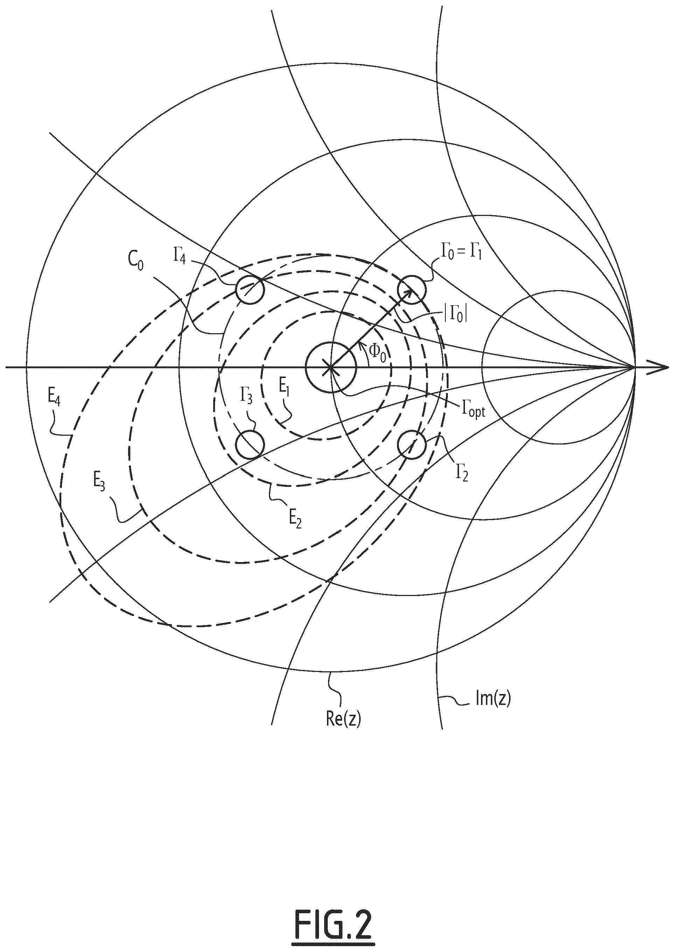

La figure 2 illustre l'effet de la mise en oeuvre des déphaseurs de robustesse selon l'invention.

La figure 2 est un abaque de Smith, connu de l'homme du métier.

L'abaque de Smith permet de représenter des coefficients de réflexion d'une charge relié par une ligne de transmission en sortie d'un composant, en l'occurrence le coefficient de réflexion $\Gamma$ de l'élément rayonnant connecté en sortie de l'amplificateur de puissance d'une chaîne d'émission par une ligne de transmission.

L'impédance de cette charge est noté Z.

Il existe une bijection entre le coefficient de réflexion $\Gamma$ et l'impédance Z de la charge :

$$\Gamma = \frac{Z - 1}{Z + 1}$$

$$Z = \frac{1 + \Gamma}{1 - \Gamma}$$

A partir du point sur l'abaque de Smith représentant un coefficient de réflexion $\Gamma$, un premier réseau de cercles (Re(z)) permet de lire la partie réelle d'une impédance normalisée, et un second réseau de cercles (Im(z)) permet de lire la partie imaginaire de l'impédance normalisée. L'abaque de Smith représente en effet l'impédance normalisée, définie comme : $z = \frac{Z}{Zc}$, où $Zc$ est une impédance caractéristique de la ligne de transmission. Les parties réelles et imaginaires de z permettent de remonter à la valeur de l'impédance Z, connaissant la longueur de la ligne de transmission et donc Zc.

Pour un amplificateur donné, un dispositif électronique dit de « load pull » est connecté en sortie de l'amplificateur et présente successivement différentes valeurs du coefficient de réflexion. Pour chaque valeur, des grandeurs caractéristiques de l'amplificateur sont mesurées, comme la puissance maximum ou l'efficacité. Cela permet de tracer, sur l'abaque de Smith, des courbes d'isoperformance, par exemple pour la puissance maximale ou pour l'efficacité.

A l'issue de ces tests, un coefficient de réflexion optimal $\Gamma_{opt}$ est choisi en fonction de l'application. Par exemple, une valeur est choisie permettant un certain compromis entre puissance maximum et efficacité pour un amplificateur de puissance.

Le coefficient de réflexion optimal $\Gamma_{opt}$ peut-être fictivement ramené au centre de l'abaque de Smith ($\Gamma_{opt}$ = 0). En effet, un amplificateur de puissance est généralement constitué d'un étage d'amplification proprement dit (ensemble de transistors) et d'un étage d'adaptation (bobinage et capacité). C'est l'étage d'adaptation qui permet en réalité de présenter à l'étage d'amplification le coefficient de réflexion optimal.

Ainsi, en revenant à la présentation de l'invention, le coefficient de réflexion optimal $\Gamma_{opt}$, correspon-dant à l'impédance optimale $Z_{opt}$, est choisi pour optimi-ser les caractéristiques de l'amplificateur de puissance.

Le coefficient d'adaptation optimal $\Gamma_{opt}$ est ob-tenu au centre de l'abaque de Smith.

Cependant, à cause de la désadaptation d'im-pédance, l'impédance $Z_0$ effectivement connectée en sortie de l'amplificateur de puissance est différente de $Z_{opt}$. Elle correspond au coefficient de réflexion $\Gamma_0$ sur

l'abaque de Smith.

En tant que nombre complexe, ce coefficient de réflexion s'écrit : $\Gamma_0 = |\Gamma_0|\exp(j\phi_0)$, avec $|\Gamma_0|$ l'amplitude et $\phi_0$ la phase.

Sur l'abaque de Smith de la figure 2, ont été représentées plusieurs courbes d'iso-performance en efficacité de l'amplificateur de puissance considéré.

Par exemple, la première courbe $E_1$, la plus intérieure, correspond à une diminution d'un décibel par rapport à l'efficacité optimale obtenue pour $\Gamma_{opt}$, la seconde courbe $E_2$ correspond à une diminution de deux décibels par rapport à l'efficacité optimale, la troisième courbe $E_3$ correspond à une diminution de trois décibels par rapport à l'efficacité optimale et la quatrième courbe $E_4$, la plus extérieure, correspond à une diminution de quatre décibels par rapport à l'efficacité optimale.

Ces courbes ne sont pas circulaires autour de $\Gamma_{opt}$ (c'est-à-dire de l'efficacité maximale obtenue pour l'impédance optimale $Z_{opt}$), mais présentent une forme elliptique.

Puisque l'une des causes possibles de la désadaptation d'impédance est due à un couplage entre l'élément rayonnant de l'antenne élémentaire considérée et les éléments rayonnants voisins, la désadaptation d'impédance est une caractéristique de l'élément rayonnant.

Elle est donc la même pour les différents amplificateurs de puissance adressant les différents ports d'un même élément rayonnant.

En conséquence, sans la mise en oeuvre de l'invention, les coefficients de réflexion vus par les différents amplificateurs du TRM 20 sont égaux et se situent en un même point, en l'occurrence $\Gamma_0$.

Le coefficient de réflexion $\Gamma_0$ se trouve quelque part sur un cercle $C_0$ de centre $\Gamma_{opt}$ et de rayon $|\Gamma_0|$. Sa position n'est pas maîtrisée et peut notamment correspondre à une forte dégradation des performances des amplificateurs de puissance d'une même antenne élémentaire. C'est ce qui est représenté sur la figure 2, où le coefficient de réflexion $\Gamma_0$ se situe sur la courbe $E_4$, soit une diminution de quatre décibels par rapport à l'efficacité optimale selon l'exemple donné.

Le coefficient de réflexion $\Gamma_0$ n'étant pas a priori identiques d'une antenne élémentaire à l'autre (ce qui est d'autant plus vrai pour les antennes élémentaires à la périphérie du réseau), cela entraîne une forte variabilité des performances des antennes élémentaires constitutives d'une antenne réseau.

Au contraire, en mettant en oeuvre l'invention, à savoir en introduisant une phase $\phi_i$ caractéristique en aval de chaque amplificateur de puissance, la désadaptation d'impédance devient spécifique de chaque chaîne d'émission d'une même antenne élémentaire.

Le coefficient de réflexion de la ième chaine d'émission devient alors : $\Gamma_i = |\Gamma_0|\exp(j(\phi_0 - 2\phi_i))$.

Grâce au déphaseur de robustesse, une rotation autour du point de charge optimale $\Gamma_{opt}$ est effectuée. On déplace ainsi le coefficient de réflexion $\Gamma_i$ de la ième chaine d'émission sur le cercle $C_0$.

Les phases $\phi_i$ étant différentes d'une chaine d'émission à l'autre, les coefficients de réflexion $\Gamma_i$ ne se superposent plus en un même point, mais sont répartis sur le cercle $C_0$. Avantageusement, ils sont répartis de manière uniforme sur le cercle $C_0$.

Avec le choix précédent de phases, le premier coefficient de réflexion $\Gamma_1$ n'est pas déplacé, le second coefficient de réflexion $\Gamma_2$ est déplacé de -90°, le troisième coefficient de réflexion $\Gamma_3$ est déplacé de -180°, et le quatrième coefficient de réflexion $\Gamma_4$ est déplacé de -270° (ou +90°).

En conséquence, les différents coefficients de réflexion se trouvent maintenant sur des courbes d'iso-performance différentes. Certains coefficients de réflexion vont se retrouver sur des courbes d'iso-efficacité meilleure que la courbe d'origine ou bien meilleure que la courbe d'origine ($E_4$ dans l'exemple donné).

Ainsi, avec la mise en oeuvre de l'invention, les amplificateurs de puissance ne subissent pas la même dégradation de performance, ce qui fait que la variation globale de performance de l'antenne élémentaire varie moins que dans l'état de la technique où tous les amplificateurs adressant un même élément rayonnant peuvent subir simultanément une forte dégradation. Le TRM d'une antenne élémentaire est donc rendu plus robuste à une désadaptation d'impédance.

En conséquence, on réduit la variabilité entre les antennes élémentaires d'une antenne réseau.

L'avantage majeur de l'invention est donc de garantir une robustesse aux variations de charge au niveau de chaque élément rayonnant individuellement, et donc de rendre l'antenne réseau dans son ensemble plus performante. De plus, l'agilité en polarisation est maintenue.

Le rôle du déphaseur de compensation est d'introduire une phase pour compenser la phase introduite par le déphaseur de robustesse afin que l'élément rayonnant soit finalement correctement excité, c'est-à-dire par des signaux en phase.

Dans la pratique, le déphaseur de robustesse peut être placé soit dans la puce MMIC (« Monolithic microwave integrated circuit » ou « circuit intégré monolithique hyperfréquence ») portant la fonction d'amplication de puissance, soit dans le circuit imprimé de réception de la puce MMIC, à l'interconnexion entre la puce MMIC et le port de l'élément rayonnant. En variante, le déphaseur de robustesse est réalisé de manière hybride en plaçant une partie dans la puce MMIC et l'autre partie dans le circuit imprimé.

Le déphaseur de robustesse est de préférence réalisé par une ligne à retard introduisant un déphasage constant pour une bande de fréquence donnée.

Quant au déphaseur de compensation, sa fonction peut être réalisée par le déphaseur contrôlable déjà présent pour assurer les fonctions de balayage électronique et d'agilité en polarisation. Il doit alors être commandé de manière appropriée pour introduire la phase de compensation requise. On ajoute à la commande de phase d'un déphaseur contrôlable, la valeur de la phase de compensation. La compensation de phase en amont des amplificateurs de puissance peut ainsi être implémentée dans les lois de commande du dépointage sans avoir à implémenter de déphaseur supplémentaire. Il n'y a donc qu'un seul déphaseur.

Si l'invention a été présentée ci-dessus pour remédier à la désadaptation d'impédance en sortie des différentes chaînes d'émission d'un TRM, l'invention peut également être appliquée, et ce de manière éventuellement indépendante, à la désadaptation d'impédance en entrée des différentes chaînes de réception d'un TRM.

Ainsi, comme représenté sur la Figure 1, la ième chaîne de réception intègre un déphaseur de robustesse, qui est positionné en amont (dans le sens de propagation du signal de réception) de l'amplificateur faible bruit, c'est-à-dire entre l'entrée de l'amplificateur faible bruit et le duplexeur. Le déphaseur de compensation est, quant à lui, placé en aval de l'amplificateur faible bruit, c'est-à-dire entre la sortie de l'amplificateur faible bruit et l'entrée du déphaseur contrôlable.

Ainsi, la première chaine de réception 31 comporte successivement un déphaseur de robustesse 313, un amplificateur 312, un déphaseur de compensation 311, et un déphaseur contrôlable 310 ; la seconde chaine d'émission 32 comporte successivement un déphaseur de robustesse 323, un amplificateur 322, un déphaseur de compensation 321, et un déphaseur contrôlable 320 ; la troisième chaine d'émission 33 comporte successivement un déphaseur de robustesse 333, un amplificateur 332, un déphaseur de compensation 331, et un déphaseur contrôlable 330 ; et la quatrième chaine d'émission 34 comporte successivement un déphaseur de robustesse 343, un amplificateur 342, un déphaseur de compensation 341, et un déphaseur contrôlable 340.

Le déphaseur de robustesse de la ième chaîne de réception introduit une phase constante $\phi_i$ dans le signal reçu du ième port de l'élément rayonnant 10.

Le déphaseur de compensation de la ième chaîne de réception introduit une phase constante $\Phi'_i$ dans le signal reçu.

La somme de la phase $\phi_i$ introduite par le déphaseur de robustesse de la ième chaîne de réception et de la phase $\varphi'_i$ introduite par le déphaseur de compensation de la ième chaîne de réception est une constante Cste, qui est commune à toutes les chaînes de réception de l'antenne élémentaire 5.

Ainsi :

$$\forall i, i \in \{1, 2, \ldots N\}, \phi_i + \phi'_i = \text{Cste}$$

Ceci afin que les différents signaux reçus en sortie des chaînes de réception d'un même élément rayonnant soient équidéphasés par les moyens déphaseurs présentés ci-dessus.

La phase $\phi_i$ introduite par un déphaseur de robustesse est spécifique de la ième chaîne de réception. Dit autrement, deux déphaseurs de robustesse de l'antenne élémentaire introduisent des phases différentes.

On réalise ainsi une modulation de la charge présentée en entrée des différents amplificateurs faible bruit de l'antenne élémentaire avec pour effet de réduire la variabilité du rapport signal sur bruit et/ou de la linéarité des différentes antennes élémentaires de l'antenne réseau fonctionnant en réception.

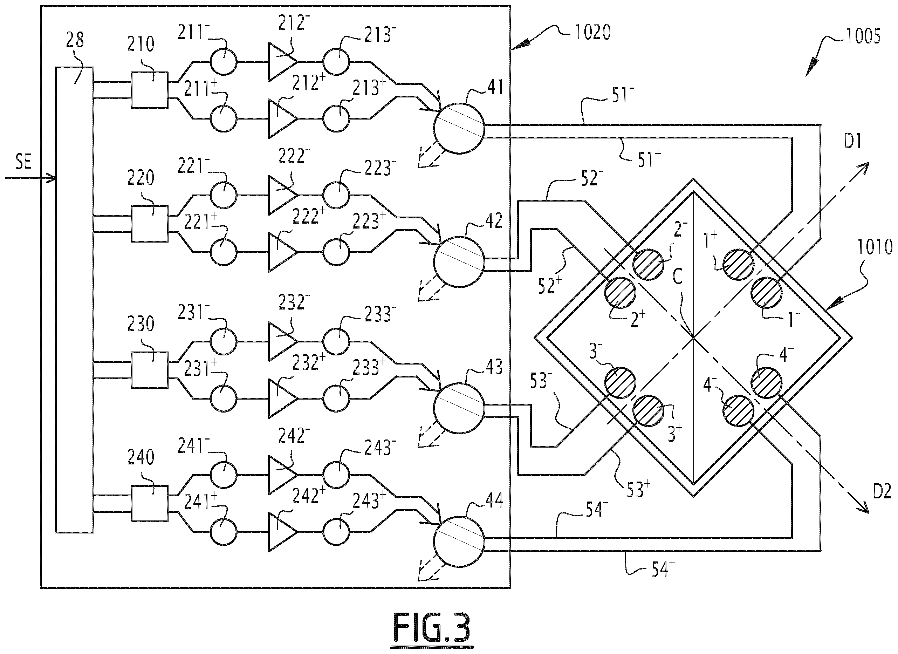

La figure 3 illustre un second mode de réalisation. L'antenne élémentaire 1005 comporte un TRM 1020 et un élément rayonnant 1010.

Pour des raisons de clarté, la figure 3 a été limitée aux moyens d'émission, mais une description similaire pourrait être faite pour les moyens de réception.

L'élément rayonnant 1010 comporte quatre paires de ports. Chaque paire de ports comporte un port positif et un port négatif.

Les ports d'une même paire de ports sont alimentés en différentiel par une chaîne d'émission adaptée.

Ainsi, un composant du second mode de réalisation identique à un composant du premier mode de réalisation est référencé par le même chiffre de référence que celui utilisé sur la figure 1 pour référencer le composant correspondant. Les références des composants du second mode de réalisation portent un indice + ou - en fonction du port positif ou négatif de la paire de ports qu'ils adressent.

Ainsi, pour la ième chaîne d'émission positive qui est associée au port positif i+ de la ième paire de ports, un déphaseur de robustesse positif est positionné en aval de l'amplificateur de puissance positif, c'est-à-dire entre la sortie de l'amplificateur de puissance positif et le duplexeur, pour introduire une phase positive $\phi_i^+$. Un déphaseur de compensation positif est, quant à lui, placé en amont de l'amplificateur de puissance positif, c'est-à-dire entre la sortie du déphaseur contrôlable et de l'entrée de l'amplificateur de puissance, pour introduire une phase positive $\phi'^+_i$.

Ainsi, pour la ième chaîne d'émission négative, qui est associée au port négatif i- de la ième paire de ports, un déphaseur de robustesse négatif est positionné en aval de l'amplificateur de puissance négatif, c'est-à-dire entre la sortie de l'amplificateur de puissance négatif et le duplexeur, pour introduire une phase négative $\phi_i^-$. Un déphaseur de compensation négatif est, quant à lui, placé en amont de l'amplificateur de puissance négatif, c'est-à-dire entre la sortie du déphaseur contrôlable et de l'entrée de l'amplificateur de puissance, pour introduire une phase négative $\phi'^-_i$.

On conserve la contrainte :

$$\forall i, i \in \{1, 2, \dots N\}, \phi_i^+ + \phi_i'^+ = \phi_i^- + \phi_i'^- = \text{Cste}$$

Par exemple, pour le mode de réalisation de la figure 3, avec quatre paires de ports, le jeu de phases suivantes est retenu :

$$\phi_1^+ = \phi_1^- = 0°; \ \phi_1'^+ = \phi_1'^- = 135°$$

$$\phi_2^+ = \phi_2^- = 45°; \ \phi_2'^+ = \phi_2'^- = 90°$$

$$\phi_3^+ = \phi_3^- = 90°; \ \phi_3'^+ = \phi_3'^- = 45°$$

$$\phi_4^+ = \phi_4^- = 135°; \ \phi_4'^+ = \phi_4'^- = 0°$$

En variante, on peut faire en sorte que les deux amplificateurs d'une même chaine d'émission ne soient pas associés à un même coefficient de réflexion, en choisissant $\phi_i^+$ différent de $\phi_i^-$ . Ceci correspond en fait à considérer l'élément rayonnant comme alimenté par huit ports et non quatre paires de ports.

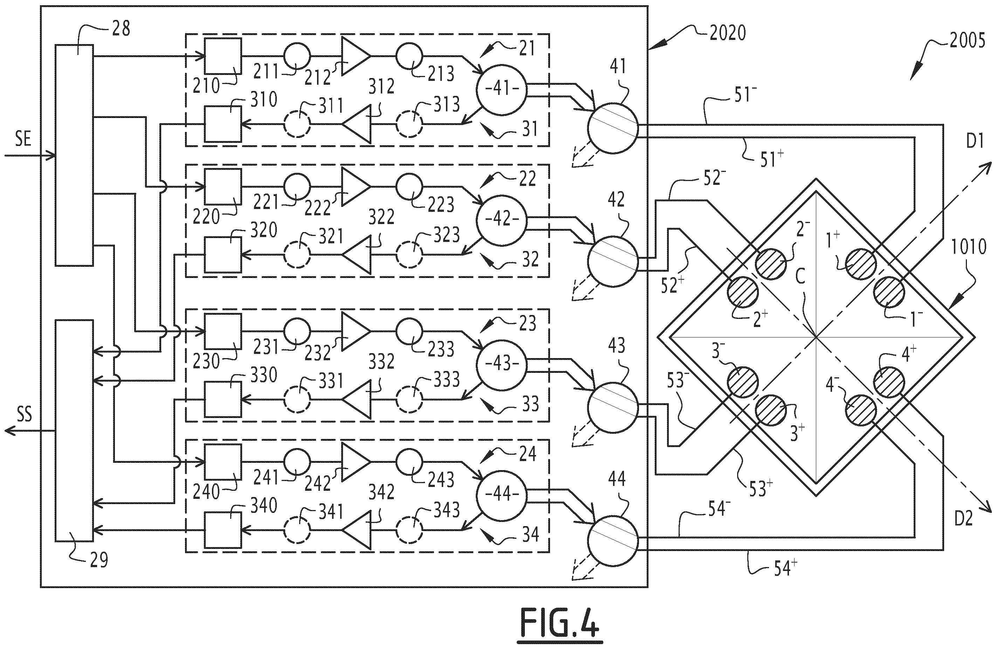

La figure 4 illustre un troisième mode de réalisation. L'antenne élémentaire 2005 comporte un TRM 2020 et un élément rayonnant 1010, qui, comme l'élément rayonnant du second mode de réalisation, est alimenté en différentiel.

Un composant du troisième mode de réalisation identique à un composant du premier mode de réalisation est référencé par le même chiffre de référence que celui utilisé sur la figure 1 pour référencer le composant correspondant.

Dans ce troisième mode de réalisation, la ième chaîne d'émission, qui est associée au port positif i⁺ et au port négatif i⁻ de la ième paire de ports, comporte un unique amplificateur de puissance (2212 pour la première chaine 2021), présentant une entrée et deux sorties en différentiel.

Un déphaseur de robustesse (2213 pour la première chaine 2021), qui est positionné entre la sortie de l'amplificateur de puissance et le duplexeur, présente deux entrées en différentiel et deux sorties en différentiel. Le déphaseur de robustesse introduit une phase de robustesse $\phi_i$ identique sur les deux liaisons en différentiel.

Un déphaseur de compensation (211 pour la première chaine 2021) est, quant à lui, placé en amont de l'amplificateur de puissance, c'est-à-dire entre la sortie du déphaseur contrôlable (210 pour la première chaine 2021) et de l'entrée de l'amplificateur de puissance, pour introduire une phase de compensation $\phi_i'$ .

On conserve une fois encore la contrainte :

$$\forall i, i \in \{1, 2, \dots N\}, \phi_i + \phi_i' = \text{Cste}$$

On sélectionne un jeu de phases de robustesse tel que : $\forall i$ et $\forall j$, i et j $\in \{1, 2, \dots N\}$, $i \neq j$, $\phi_i \neq \phi_j$ .

L'invention peut être mise en oeuvre dans une antenne ne comportant qu'une unique antenne élémentaire, i.e. un unique élément rayonnant.

En mettant en oeuvre l'invention dans chacune des antennes élémentaires constitutives d'une antenne réseau, on obtient une homogénéisation du comportement des différents dispositifs rayonnants.

La compensation étant réalisée localement au niveau de chaque élément rayonnant de l'antenne réseau, elle est adaptée à la position de l'élément rayonnant considéré au sein de l'antenne.

Dans une antenne élémentaire fonctionnant en émission et en réception, l'invention peut être mise en oeuvre en émission uniquement, en réception uniquement, ou simultanément en émission (pour remédier à la désadaptation d'impédance entre l'élément rayonnant et les différentes chaînes d'émission) et en réception (pour remédier à la désadaptation d'impédance entre l'élément rayonnant et les différentes chaînes de réception).

Dans ce dernier cas, les phases introduites par la chaîne d'émission et par la chaîne de réception d'une même voie peuvent être identiques ou différentes.

Si elles sont identiques, le déphaseur de robustesse est avantageusement placé en entre le duplexeur et l'élément rayonnant, le long de la ligne d'alimentation du port correspondant de l'élément rayonnant. Un seul déphaseur de robustesse est alors placé en commun pour l'émission et la réception. Par exemple, les déphaseurs 213 et 313 sont remplacés par un déphaseur de robustesse commun implémenté sur la ligne 51.

Une solution hybride est envisageable, dans laquelle une partie du déphaseur de robustesse est d'un côté du duplexeur et l'autre partie du déphaseur de robustesse est de l'autre côté du duplexeur, sur la ligne d'alimentation du port.

Dans une autre variante, l'invention est mise en oeuvre en émission dans une antenne ne fonctionnant qu'en émission (comportant uniquement des chaînes d'émission et ne comportant donc pas de chaînes de réception) ou bien en réception dans une antenne ne fonctionnant qu'en réception (comportant uniquement des chaînes de réception et ne comportant donc pas de chaînes d'émission).

Eventuellement, en variante, dans une antenne réseau, même si son enseignement technique donne de moins bons résultats que l'invention du fait des positions différentes des éléments unitaires, l'enseignement du document WO 2023/072749 pourrait être mis en oeuvre entre antennes élémentaires pour neutraliser des variations d'impédance entre antennes élémentaires, tout en mettant en oeuvre l'invention entre ports d'un élément rayonnant pour neutraliser des variations d'impédance au sein de chaque antenne élémentaire.

La présente invention trouve principalement des applications dans le domaine des radars. Elle peut néanmoins s'appliquer à des brouilleurs, des radios et des liaisons de données, ainsi que des systèmes multifonctions utilisant des antennes réseaux à balayage électronique actif.

## Revendications

1. Antenne élémentaire (5) comprenant un élément rayonnant (10) et un module d'émission et/ou de réception (20), l'élément rayonnant comportant N zones d'excitation, N entier supérieur ou égal à 2, une zone d'excitation étant un port ou une paire de ports, le module d'émission et/ou de réception comportant, pour chaque entier i entre 1 et N, une ième chaîne (21, 22, 23, 24) connectée, via une ième ligne d'alimentation (51, 52, 53, 54) à la ième zone d'excitation (1, 2, 3, 4) de l'élément rayonnant, la ième chaîne comportant un ième amplificateur (212, 222, 232, 242), **caractérisée en ce que** l'antenne élémentaire comporte, pour chaque chaîne, un ième déphaseur de robustesse (213, 223, 233, 243) d'un premier côté du ième amplificateur, entre le ième amplificateur et l'élément rayonnant, et un ième déphaseur de compensation (211, 221, 231, 241) d'un second côté du ième amplificateur opposé au premier côté, et **en ce que** la somme des phases introduites par le ième déphaseur de robustesse et le ième déphaseur de compensation est constante quelle que soit la chaine considérée, et la phase introduite par le ième déphaseur de robustesse est strictement différente de la phase introduite par les autres déphaseurs de robustesse des autres chaines de l'antenne élémentaire.

2. Antenne élémentaire selon la revendication 1, dans laquelle chaque chaine est une chaine d'émission, l'amplificateur de la ième chaine étant un amplificateur de puissance.

3. Antenne élémentaire selon la revendication 1 ou la revendication 2, dans laquelle chaque chaine est une chaine de réception, l'amplificateur de la ième chaine étant un amplificateur faible bruit.

4. Antenne élémentaire selon l'une quelconque des revendications précédentes, dans laquelle les phases introduites par les déphaseurs de robustesse sont réparties uniformément dans l'intervalle [0° ; 180°[.

5. Antenne élémentaire selon l'une quelconque des revendications précédentes, dans laquelle, l'élément rayonnant comportant quatre ports, les phases respectivement introduites par les premier, second, troisième, et quatrième déphaseurs de robustesse sont choisies égales à 0°, 45°, 90°, et 135°.

6. Antenne élémentaire selon la revendication 5, dans laquelle les phases respectivement introduites par les premier, second, troisième, et quatrième déphaseurs de compensation sont choisies égales à 135°, 90°, 45°, et 0°.

7. Antenne élémentaire selon l'une quelconque des revendications 1 à 4, dans laquelle l'élément rayonnant comportant N paires de ports, la ième chaîne comporte un ième amplificateur positif et un ième déphaseur de robustesse positif associé à un port positif de la ième paire de ports, et un ième amplificateur négatif et un ième déphaseur de robustesse négatif associé à un port négatif de la ième paire de ports.

8. Antenne élémentaire selon l'une quelconque des revendications précédentes, dans laquelle le ième déphaseur de robustesse est constitué par une ième ligne de retard.

9. Antenne élémentaire selon l'une quelconque des revendications précédentes, dans laquelle le ième déphaseur de compensation est intégré dans un ième déphaseur contrôlable de la ième chaîne.

10. Antenne réseau à balayage électronique actif comportant une pluralité d'antennes élémentaires, **caractérisée en ce que** chaque antenne élémentaire est conforme à une antenne élémentaire selon l'une quelconque des revendications précédentes.

**FIG.1**

FIG.2

<u>FIG.3</u>

FIG.4

Europäisches Patentamt

European Patent Office

Office européen des brevets

# RAPPORT DE RECHERCHE EUROPEENNE

**Numéro de la demande**

EP 25 15 6160

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2023/072749 A1 (ERICSSON TELEFON AB L M [SE]) 4 mai 2023 (2023-05-04) <br> * page 1, ligne 21 - page 4, ligne 3 * <br> * page 8, ligne 28 - page 10, ligne 18 * <br> * figures 1-14 * <br> ----- | 1-10 | INV. <br> H04B1/04 <br> H04B1/18 <br> H01Q3/28 <br> H01Q21/00 |
| A | US 2015/002243 A1 (DARWISH ALI M [US] ET AL) 1 janvier 2015 (2015-01-01) <br> * alinéa [0038] - alinéa [0105] * <br> * figures 1-10 * <br> ----- | 1-10 | ADD. <br> H01Q9/04 <br> H01Q21/06 |
| A | JP 2010 041588 A (MITSUBISHI ELECTRIC CORP) 18 février 2010 (2010-02-18) <br> * le document en entier * <br> ----- | 1-10 | |

**DOMAINES TECHNIQUES RECHERCHES (IPC)**

H01Q
H04B

Le présent rapport a été établi pour toutes les revendications

| Lieu de la recherche | Date d'achèvement de la recherche | Examinateur |
|---|---|---|
| Munich | 26 mai 2025 | Patrovsky, Andreas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 15 6160

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-05-2025

| Document brevet cité au rapport de recherche | Date de publication | Membre(s) de la famille de brevet(s) | Date de publication |
|---|---|---|---|
| WO 2023072749 A1 | 04-05-2023 | EP 4423913 A1 | 04-09-2024 |
| | | US 2024421880 A1 | 19-12-2024 |
| | | WO 2023072749 A1 | 04-05-2023 |
| US 2015002243 A1 | 01-01-2015 | AUCUN | |
| JP 2010041588 A | 18-02-2010 | JP 5109863 B2 | 26-12-2012 |
| | | JP 2010041588 A | 18-02-2010 |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3062523

- WO 2023072749 A